**Europäisches Patentamt**

**European Patent Office**

**Office européen des brevets**

(19)

(11) Veröffentlichungsnummer: **0 126 204
B1**

(12)

# EUROPÄISCHE PATENTSCHRIFT

(45) Veröffentlichungstag der Patentschrift:
**22.06.88**

(51) Int. Cl.⁴: **C 01 B 33/28**

(21) Anmeldenummer: **84100706.5**

(22) Anmeldetag: **24.01.84**

(54) **Verfahren zur Herstellung einer Impfmischung für die Faujasit-Synthese.**

(30) Priorität: **29.03.83 DE 3311339**

(43) Veröffentlichungstag der Anmeldung:
**28.11.84 Patentblatt 84/48**

(45) Bekanntmachung des Hinweises auf die Patenterteilung:
**22.06.88 Patentblatt 88/25**

(84) Benannte Vertragsstaaten:
**BE DE FR GB IT NL**

(56) Entgegenhaltungen:
**DE - A - 1 952 192
DE - A - 2 703 264
DE - B - 1 767 074
DE - C - 1 098 929
DE - C - 1 930 705**

(73) Patentinhaber: **Degussa Aktiengesellschaft,
Weissfrauenstrasse 9, D-6000 Frankfurt am Main 1 (DE)**

(72) Erfinder: **Strack, Hans, Dr., Riemenschneiderstrasse 1,
D-8755 Alzenau (DE)**
Erfinder: **Kleinschmit, Peter, Dr., Wildaustrasse 19,
D-6450 Hanau 9 (DE)**

ACTORUM AG

EP 0 126 204 B1

## Beschreibung

Die Erfindung betrifft ein Verfahren zur Herstellung einer Impfmischung für die Faujasit-Synthese.

Faujasit ist ein synthetisches Natriumalumosilikat mit einem dreidimensionalen Netzwerk von Kanälen und Hohlräumen. Aufgrund seiner chemischen Zusammensetzung und Struktur, sowie Temperaturbeständigkeit und Modifizierbarkeit, besitzt Faujasit aussergewöhnliche katalytische Eigenschaften, die die Verwendung in beispielsweise Crackkatalysatoren ermöglicht.

Bei dem Einsatz in Crackkatalysatoren spielen röntgenographische Phasenreinheit, Kristallinitätsgrad, $SiO_2/Al_2O_3$-Verhältnis und Adsorptionseigenschaften eine zentrale Rolle (DE-AS 1 203 239, DE-PS 1 098 929, DE-PS 1 038 016).

Es ist bekannt, Impfmischungen für die Faujasit-Synthese aus Wasser, Alkalimetallhydroxid, Siliciumdioxid und Aluminiumoxid herzustellen, indem man Natriumsilikat und Natriumaluminat miteinander vermischt (DE-PS 1 930 705, US-PS 4 228 137, US-PS 2 433 589).

Die Herstellung dieser Impfmischung setzt eine exakte Dosierung der Komponenten voraus. Gemäss Beispiel 1 der DE-PS 1 920 705 beträgt das Verhältnis der Komponenten $Na_2O:Al_2O_3:SiO_2:H_2O = 15:1:15:165$. Nachteiligerweise führen schon geringe Abweichungen hiervon zu Fehlkristallisationen. Ausserdem geliert diese an sich pumpfähige Mischung gelegentlich zu einer kompakten Masse, die nur unter Verlust der Impfeigenschaften wieder in den pumpfähigen Zustand überführt werden kann.

Aus der US-PS 4 228 137 sind Impfmischungen der Zusammensetzung ($Na_2O:Al_2O_3:SiO_2:H_2O = 11:1:11,3:240$) bekannt, die aus calcinierten Clays hergestellt werden. Nachteilig hierbei ist, dass nur spezielle Claysorten nach der Calcinierung Impfeigenschaften besitzen, und als Naturprodukte in ihrer chemischen Zusammensetzung stets Schwankungen unterworfen sind. Verunreinigungen mit Fremdionen können sich ebenfalls nachteilig auf die Impfeigenschaften auswirken.

Aufgabe der Erfindung ist es, ein Verfahren zur Herstellung einer Impfmischung für die Faujasit-Synthese zu schaffen, die wirtschaftlich und gut reproduzierbar in engen Toleranzgrenzen hergestellt werden kann.

Gegenstand der Erfindung ist ein Verfahren zur Herstellung einer Impfmischung für die Faujasit-Synthese, welches dadurch gekennzeichnet ist, dass man ein amorphes, synthetisches Natriumaluminiumsilikat mit einer $Na_2O$ liefernden Verbindung im wässrigen System bei Temperaturen von 10 bis 35°C derart umsetzt, dass die Zusammensetzung der erhaltenen Mischung $Na_2O:Al_2O_3:SiO_2:H_2O = 12\pm3:1:15\pm3:240\pm60$ beträgt und man diese Mischung, vorzugsweise bei 10 bis 35°C (Raumtemperatur), wenigstens 24 Stunden altern lässt.

In einer vorzugsweisen Ausführungsform weist das amorphe Natriumaluminiumsilikat die folgenden Eigenschaften auf:

$SiO_2$-Gehalt: 70–90% (bez. auf wasserfreie Substanz)
$Al_2O_3$-Gehalt: 6–10% (bez. auf wasserfreie Substanz)
$Na_2O$-Gehalt: 5–9% (bez. auf wasserfreie Substanz)
BET-Oberfläche: 50–150 m²/g
pH-Wert: 10–11

Das amorphe Natriumaluminiumsilikat kann nach dem bekannten Verfahren gemäss DE-PS 1 299 616 hergestellt werden.

Die bei dem erfindungsgemässen Verfahren eingesetzten amorphen Natriumaluminiumsilikate können beispielsweise die folgenden physikalisch-chemischen Kenndaten aufweisen:

| | |
|---|---|
| Trockenverlust | 5–6% |
| Glühverlust | 10–11% |
| $SiO_2$ | 74% |
| $Al_2O_3$ | 7% |
| $Na_2O$ | 7% |
| $SO_4$ | 0,5% |
| CaO | 0,2% |
| $Fe_2O_3$ | 0,1% |
| spez. Gewicht | 2,0 g/cm³ |
| Schüttgewicht | 75 g/l |
| Rüttelgewicht | 160 g/l |
| pH-Wert | 11 |
| BET-Oberfläche | 55 m²/g |
| DBA-Zahl | 80 |
| Primärteilchendurchmesser | 35 nm |

oder

| | |
|---|---|
| Trockenverlust | 6,0% |
| Glühverlust | 13,0% |
| $SiO_2$ | 70,0% |
| $Al_2O_3$ | 9,0% |
| CaO | 0,4% |
| $Na_2O$ | 7,0% |
| $SO_4$ | 0,3% |
| $Fe_2O_3$ | 0,1% |
| spez. Gewicht | 1,94 |
| Schüttgewicht | 80 g/l |
| Rüttelgewicht | 130 g/l |
| pH-Wert | 10,5 |
| BET-Oberfläche | 130 m² |
| DBA-Zahl | 150 |
| Primärteilchendurchmesser | 35 nm |

oder

| | |
|---|---|
| Aussehen | lockeres weisses Pulver |
| Oberfläche nach BET | 110 m²/g |
| Mittlere Grösse der Primärteilchen | 35 Millimikron |
| Schüttgewicht | 150 g/l |
| Stampfvolumen (nach DIN 53 194) | 700 ml/100 g |
| Trocknungsverlust (nach DIN 53 198, Verfahren A) (2 Std. bei 105°C) | 6% |

| | |
|---|---|
| Glühverlust (nach DIN 52 911) (2 Std. bei 1000°C) | 7% |
| pH-Wert (nach DIN 53 200) (in 5%iger wässriger Dispersion) | 10,4 |
| Dichte | 2,1 g/cm³ |
| Brechungsindex | 1,46 |
| Weissgehalt bei 460 nm | 98% |
| Hellbezugswert A (nach DIN 53 163) | 95% |
| SiO₂* | 76% |
| Al₂O₃* | 8,5% |
| Fe₂O₃ | 0,05% |
| Na₂O* | 7,5% |
| Siebrückstand nach Mocker (nach DIN 53 580) | 0,01% |

* bezogen auf die 2 Stunden bei 105°C getrocknete Substanz.

Das amorphe Natriumaluminiumsilikat kann als Pulver und/oder als wasserhaltiger Filterkuchen eingesetzt werden.

Die Na₂O-liefernde Verbindung kann Natriumhydroxid, Natriumsilikat oder Natriumaluminat sein.

Die Impfmischung kann vorzugsweise hergestellt werden, indem man die Na₂O-liefernde Verbindung in wässriger Lösung, vorzugsweise bei 10 bis 35°C (Raumtemperatur) vorlegt und das amorphe Natriumaluminiumsilikat unter Rühren hinzufügt. Dabei werden die folgenden Mengenverhältnisse eingehalten: Na₂O:Al₂O₃:SiO₂:H₂O = 12±3:1:15±3:240±60. Die Impfmischung muss wenigstens 24 Stunden bei 10 bis 35°C (Raumtemperatur) gealtert werden. Sie ist bis zu 1 Jahr gebrauchsfähig.

Das erfindungsgemässe Verfahren zeigt die folgenden Vorteile:

Die als Ausgangsverbindungen eingesetzten synthetischen, amorphen Natriumaluminiumsilikate stehen stets in ausreichender Reinheit und in praktisch nicht begrenzten Mengen zur Verfügung.

Bei der Herstellung der erfindungsgemässen Impfmischung liegen die Komponenten SiO₂ und Al₂O₃ in dem Natriumaluminiumsilikat in einem festen stöchiometrischen Verhältnis vor. Dosierfehler können ausgeschlossen werden, da für die Einstellung der Molverhältnisse vorzugsweise nur verdünnte Natronlauge und/oder Wasser benötigt werden. Geringfügige Korrekturen des SiO₂:Al₂O₃-Verhältnisses können gegebenenfalls durch Verwendung Na₂O-haltiger Laugen, die geringe Mengen an Al₂O₃ bzw. SiO₂ enthalten, vorgenommen werden.

Die erfindungsgemäss hergestellten Impfmischungen zeigen überraschenderweise keine Tendenz zum Gelieren. Sie können auch nach Monaten, z.B. bis zu einem Jahr, ohne erkennbare Veränderungen zur Faujasit-Synthese verwendet werden.

Mit der erfindungsgemässen Impfmischung kann man Faujasite des Typs Y und des Typs X herstellen, wobei man bekannte Ausgangsstoffe sowie bekannte Reaktionsmischungen verwenden kann.

Insbesondere können Reaktionsbedingungen gewählt werden, wie sie in der DE-PS 1 038 016, DE-PS 1 098 929 und der DE-AS 1 203 239 beschrieben werden.

Die Impfmischung kann dabei in Mengen von 0,5 bis 10 Vol.%, vorzugsweise 2 bis 3 Vol.%, bezogen auf die Synthesemischung, zugesetzt werden.

Beispiel 1 (erfindungsgemässe Impfmischung)

In einem 100-l-Behälter mit Rührer werden 41 l Wasser vorgelegt und 14,3 l 50%ige Natronlauge (σ = 1,52, 589 g/l) zugegeben. Die Lösung wird auf Raumtemperatur abgekühlt. Hierzu werden 16,2 kg amorphes Natriumaluminiumsilikat (Degussa-Handelsprodukt P 820: 76% SiO₂, 8,5% Al₂O₃, 7,5% Na₂O, Glühverlust bei 1000°C 7%, pH-Wert 10,4. BET-Oberfläche 110 m²/g) eingerührt. Man erhält ca. 52 l einer dünnflüssigen Suspension der Zusammensetzung Na₂O:Al₂O₃:SiO₂:H₂O = 12:1:15:240.

Beispiel 2 (erfindungsgemässe Impfmischung)

In einem 100-l-Behälter mit Rührer werden 36,6 l Wasser vorgelegt und 12,6 l 50%ige Natronlauge (σ = 1,52, 589 g Na₂O) zugegeben. Nach dem Abkühlen auf Raumtemperatur werden 17 kg amorphes Natriumaluminiumsilikat (Degussa-Handelsprodukt AS 7: 74% SiO₂, 7% Al₂O₃, 7% Na₂O, Glühverlust bei 1000°C 11%, pH-Wert 11, BET-Oberfläche 55 m²/g) eingerührt. Man erhält ca. 44 l einer dünnflüssigen Suspension der Zusammensetzung Na₂O:Al₂O₃:SiO₂:H₂O = 12:1:18:240.

Beispiel 3 (erfindungsgemässe Impfmischung)

In einem 10-l-Behälter werden unter Rühren 3955 ml Wasser und 846 g Ätznatron vorgelegt. Nach dem Abkühlen auf Raumtemperatur werden 1457 g amorphes Natriumaluminiumsilikat (Degussa-Handelsprodukt AS 9: 70% SiO₂, 9% Al₂O₃, 7% Na₂O, Glühverlust bei 1000°C 13%, pH-Wert 10,5, BET-Oberfläche 130 m²/g) eingerührt. Man erhält ca. 4 l einer dünnflüssigen Suspension der Zusammensetzung Na₂O:Al₂O₃:SiO₂:H₂O = 9,5:1:13,2:187.

Beispiel 4 (Herstellung von Zeolith Y)

In einem 2-m²-Behälter mit MIG-Rührer werden 1400 l Wasser und 93 l 50%ige Natronlauge (σ = 1,52, 589 g/l Na₂O) vermischt und auf 80°C aufgeheizt. Hierzu werden 513 kg einer gefällten Kieselsäure (Degussa-Handelsprodukt VN 3: 89% SiO₂, Glühverlust bei 1000°C 10%) in 1,5 Stunden unter kräftigem Rühren eindosiert. Anschliessend werden unter kräftigem Rühren bei dieser Temperatur innerhalb 17 Min. 497 l Aluminatlauge (229 g/l Na₂O, 165 g/l Al₂O₃, σ = 1,35) zudosiert und weitere 10 Min. kräftig gerührt. Die Synthesemischung hat eine Zusammensetzung Na₂O:Al₂O₃:SiO₂:H₂O = 3,4:1:9,5:140. Hierzu werden 52 l Impfmischung gemäss Beispiel 1 unter langsamem Rühren gegeben. Die Impfmischung war 118 Std. bei Raumtemperatur gealtert worden. Die Suspension wird auf 97°C aufgeheizt und 15 Std. unter langsamem Rühren kristallisiert. Danach wird die Suspension auf 50°C abgekühlt, der Zeolith wird abfiltriert, gewaschen, bis der pH-Wert des abfliessenden Waschwassers <10,5 beträgt, und bei 110°C getrocknet. Man erhält 328 kg Zeolith Y mit einer Zellkonstante $a_0$ = 24,70 (Wasseraufnahmekapazität 30,2%, Glühverlust bei 1000°C 15,7%).

Beispiel 5 (Herstellung von Zeolith Y)

In einem 1-l-Quickfit-Kolben mit Teflonrührer, Tropftrichter, Innenthermometer und Mantelheizung werden 657 ml Wasserglas (100 g/l $Na_2O$, 347 g/l $SiO_2$, $\sigma$ = 1,35) vorgelegt. Hierzu wird eine Lösung von 30 g Ätznatron in 205 ml Wasser gegeben. Die Natriumsilikatlösung besitzt dann eine Temperatur von 40°C. Hierzu werden in 10 min 102 ml Aluminatlauge (283 g/l $Na_2O$, 200 g/l $Al_2O_3$, $\sigma$ = 1,416) getropft. Die Synthesemischung hat eine Zusammensetzung $Na_2O:Al_2O_3:SiO_2:H_2O$ = 8,5:1:19:250. Anschliessend werden 5,1 ml einer Impfmischung (Alterungsdauer: 9 Tage) gemäss Beispiel 2 zugegeben. Die Suspension wird auf 98°C erwärmt und 4 h kristallisiert. Während der gesamten Synthese wird kräftig gerührt. Danach wird die Reaktionsmasse auf einer Nutsche abfiltriert und gewaschen, bis das Waschwasser einen pH-Wert <10,5 aufweist. Nach dem Trocknen bei 110°C erhält man 55 g Zeolith Y mit einer Zellkonstante $a_0$ = 24,72 Å (Wasseraufnahmekapazität = 32,3%, Glühverlust bei 1000°C 17,0%).

Beispiel 6 (Herstellung von Zeolith Y)

Die Synthesemischung wird wie in Beispiel 5 beschrieben zubereitet. Als Impfmischung werden 26 ml gemäss Beispiel 3 zugesetzt. Nach der Aufarbeitung erhält man 105 g Zeolith Y mit einer Zellkonstante $a_0$ = 24,66 (Wasseraufnahmekapazität 30,9%, Glühverlust bei 1000°C 15%).

Beispiel 7 (Herstellung von Zeolith X)

In einem 2-m³-Behälter mit MIG-Rührer werden 543 l Natriumsilikatlösung (88 g/l $Na_2O$, 246 g/l $SiO_2$, $\sigma$ = 1,25) und 60 l 50%ige Natronlauge ($\sigma$ = 1,52, 58 g/l $Na_2O$) gemischt und auf 30°C eingestellt. Hierzu werden 1000 l einer Aluminatlauge, die durch Vermischen von 289 l Aluminatlauge (189 g/l $Na_2O$, 157 g/l $Al_2O_3$, $\sigma$ = 1,30) und 725 l Wasser bereitet wurde, in 60 min zugepumpt. Die Synthesemischung hat eine Zusammensetzung $Na_2O:Al_2O_3:SiO_2:H_2O$ = 5:1:5:250. Danach werden 55 l Impfmischung gemäss Beispiel 1 (28 Tage gealtert) zugegeben. Alle Schritte werden unter kräftigem Rühren durchgeführt. Das kräftige Rühren wird nun für 2 h unterbrochen und anschliessend während der Kristallisation 4 h bei 98°C fortgesetzt. Die Aufarbeitung erfolgt analog Beispiel 4. Man erhält 216 kg Zeolith X mit einer Zellkonstante von 24,88 Å (Wasseraufnahmekapazität 36,7%, Glühverlust bei 1000°C 15%).

**Patentansprüche**

1. Verfahren zur Herstellung einer Impfmischung für die Faujasit-Synthese, dadurch gekennzeichnet, dass man amorphes, synthetisches Natriumaluminiumsilikat mit einer $Na_2O$-liefernden Verbindung im wässrigen System bei Temperaturen von 10 bis 35°C derart umsetzt, dass die Zusammensetzung der erhaltenen Mischung $Na_2O:Al_2O_3:SiO_2:H_2O$ = 12±3:1:15±3:240±60 beträgt und man diese Mischung, vorzugsweise bei 10 bis 35°C (Raumtemperatur), wenigstens 24 Stunden altern lässt.

2. Verfahren nach Anspruch 1, dadurch gekennzeichnet, dass das amorphe Natriumaluminiumsilikat folgende Eigenschaften aufweist:

$SiO_2$-Gehalt: 70–90% (bez. auf wasserfreie Substanz)
$Al_2O_3$-Gehalt: 6–10% (bez. auf wasserfreie Substanz)
$Na_2O$-Gehalt: 5–9% (bez. auf wasserfreie Substanz)
BET-Oberfläche: 50–150 m²/g
pH-Wert: 10–11

3. Verfahren nach Anspruch 1 oder 2, dadurch gekennzeichnet, dass das amorphe Natriumaluminiumsilikat als Pulver und/oder als wasserhaltiger Filterkuchen eingesetzt wird.

4. Verfahren nach Anspruch 1 bis 3, dadurch gekennzeichnet, dass die $Na_2O$-liefernde Verbindung Natriumhydroxid, Natriumsilikat oder Natriumaluminat ist.

5. Verwendung der Impfmischung, erhältlich nach dem Verfahren gemäss Ansprüche 1 bis 4, zur Synthese von Faujasit.

6. Verwendung nach Anspruch 5, dadurch gekennzeichnet, dass der Faujasit ein Zeolith vom Typ X ist.

7. Verwendung nach Anspruch 5, dadurch gekennzeichnet, dass der Faujasit ein Zeolith vom Typ Y ist.

**Claims**

1. A process for the preparation of an inoculating mixture for the synthesis of faujasite, characterized in that amorphous, synthetic sodium aluminium silicate is reacted with an $Na_2O$-yielding compound in aqueous systems at temperatures of from 10 to 35°C in such a way that the mixture obtained has the composition $Na_2O:Al_2O_3:SiO_2:H_2O$ = 12±3:1:15±3:240±60 and in that this mixture is left to age for at least 24 hours, preferably at 10 to 35°C (room temperature).

2. A process as claimed in claim 1, characterized in that the amorphous sodium aluminium silicate has the following properties:
$SiO_2$ content: 70–90% (based on anhydrous substance)

$Al_2O_3$ content: 6–10% (based on anhydrous substance)

Na$_2$O content: 5–9% (based on anhydrous substance)
BET surface: 50–150 m$^2$/g
pH value: 10–11

3. A process as claimed in claim 1 or 2, characterized in that the amorphous sodium aluminium silicate is used in the form of a powder and/or in the form of a water-containing filter cake.

4. A process as claimed in claims 1 to 3, characterized in that the Na$_2$O-yielding compound is sodium hydroxide, sodium silicate or sodium aluminate.

5. The use of the inoculating mixture obtained by the process claimed in claims 1 to 4 for the synthesis of faujasite.

6. The use claimed in claim 5, characterized in that the faujasite is a zeolite of the X type.

7. The use claimed in claim 5, characterized in that the faujasite is a zeolite of the Y type.

**Revendications**

1. Procédé pour la préparation d'un mélange d'ensemencement pour la synthèse de la faujasite, caractérisé en ce que l'on fait réagir un silicate de sodium aluminium amorphe, synthétique, avec un composé fournissant Na$_2$O, dans un système aqueux, à des températures de 10 à 35°C, de façon telle que la composition du mélange obtenu soit Na$_2$O:Al$_2$O$_3$:SiO$_2$:H$_2$O = 12±3:1:15±3:240±60, et on laisse vieillir ce mélange, avantageusement à 10 à 35°C (température ambiante), pendant au moins 24 heures.

2. Procédé suivant la revendication 1, caractérisé en ce que le silicate de sodium aluminium amorphe présente les propriétés suivantes:

Teneur en SiO$_2$: 70 à 90% (calculé sur la substance anhydre)
Teneur en Al$_2$O$_3$: 6 à 10% (calculé sur la substance anhydre)
Teneur en Na$_2$O: 5 à 9% (calculé sur la substance anhydre)
Surface BET: 50 à 150 m$^2$/g
Valeur du pH: 10 à 11

3. Procédé suivant les revendications 1 et 2, caractérisé en ce que le silicate de sodium aluminium amorphe est utilisé sous la forme de poudre, et/ou sous la forme de gâteau de filtre humide.

4. Procédé suivant les revendications 1 à 3, caractérisé en ce que le composant fournissant Na$_2$O est l'hydroxyde de sodium, le silicate de sodium, ou l'aluminate de sodium.

5. Utilisation du mélange d'ensemencement obtenu par le procédé suivant les revendications 1 à 4, pour la synthèse de la faujasite.

6. Utilisation suivant la revendication 5, caractérisé en ce que la faujasite est une zéolithe du type X.

7. Utilisation suivant la revendication 5, caractérisé en ce que la faujasite est une zéolithe du type Y.